(19) Europäisches Patentamt / European Patent Office / Office européen des brevets

(11) **EP 3 281 870 A1**

(12) **DEMANDE DE BREVET EUROPEEN**

(43) Date de publication:
**14.02.2018 Bulletin 2018/07**

(51) Int Cl.:
**B64C 39/02** (2006.01)   **G05D 1/00** (2006.01)
**H04N 7/18** (2006.01)

(21) Numéro de dépôt: **17185051.4**

(22) Date de dépôt: **07.08.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **11.08.2016 FR 1657727**

(71) Demandeur: **Parrot Drones**
**75010 Paris (FR)**

(72) Inventeurs:
• SEYDOUX, Henri
  75017 PARIS (FR)
• PIRAT, Frédéric
  75011 PARIS (FR)
• BABEL, Mathieu
  75011 PARIS (FR)

(74) Mandataire: **Lavoix**
**2, place d'Estienne d'Orves**
**75441 Paris Cedex 09 (FR)**

(54) **PROCÉDÉ DE CAPTURE D'UNE VIDÉO PAR UN DRONE, PROGRAMME D'ORDINATEUR, ET SYSTÈME ÉLECTRONIQUE DE CAPTURE D'UNE VIDÉO ASSOCIÉS**

(57)     L'invention concerne un procédé de capture d'une vidéo à l'aide d'une caméra embarquée sur un drone (14) à voilure fixe, la caméra comprenant un capteur d'image(s) (28), le drone (14) présentant en vol un angle (α) de dérive entre un axe longitudinal (42) du drone et une direction (40) de vol du drone.

Ce procédé comprend :
- la détermination (100) de l'angle (α) de dérive du drone (14); et
- l'obtention (106) de la vidéo par acquisition (108) d'image(s) correspondant à une zone (Zc) de dimensions réduites par rapport à celles du capteur d'image(s), la position ($P_{Zc}$) de la zone étant déterminée (110) en fonction de l'angle de dérive (α) du drone (14).

FIG.6

EP 3 281 870 A1

## Description

La présente invention concerne un procédé de capture d'une vidéo à l'aide d'une caméra embarquée sur un drone à voilure fixe, la caméra comprenant un capteur d'image(s) le drone présentant en vol un angle de dérive entre un axe longitudinal du drone et une direction de vol du drone.

En particulier, le drone à voilure fixe, est notamment de type "aile volante". Dans la suite, un « drone » désigne un aéronef sans pilote à bord. Un drone est autonome, piloté par un pilote automatique en vol autonome, ou piloté à distance assisté par le pilote automatique notamment à l'aide d'une manette de commande. L'invention concerne également un programme d'ordinateur comportant des instructions logicielles qui, lorsqu'elles sont exécutées par un ordinateur, mettent en oeuvre un tel procédé de capture d'une vidéo.

L'invention concerne également un système électronique de capture d'une vidéo comprenant un drone à voilure fixe et un capteur d'image(s) embarqué sur le drone, le drone présentant en vol un angle de dérive entre un axe longitudinal du drone et une direction de vol du drone.

Il est possible de munir un drone d'équipements pour réaliser des tâches particulières. Il est notamment possible d'équiper le drone d'une caméra possédant un capteur d'image(s), pour prendre des vidéos.

Classiquement, la direction dans laquelle est pointée la caméra correspond à l'axe longitudinal du drone. En d'autres termes, en l'absence de vent, la direction visée par la caméra embarquée sur le drone correspond à la direction de vol.

Sous l'effet du vent latéral, une force latérale est appliquée sur le corps du drone (fuselage). Pour compenser cette force latérale due au vent et éviter que le drone s'éloigne de sa route, l'utilisateur, ou le pilote automatique en vol autonome, doit provoquer un angle de dérive entre l'axe longitudinal du drone et sa direction de vol. La direction de visée de la caméra est alors décalée de l'angle dérive par rapport à la direction de vol du drone.

Dans un autre cas, lors d'une rafale de vent, l'utilisateur ou le pilote automatique n'a pas le temps de compenser la force latérale due à la rafale, l'axe longitudinal du drone et sa direction de vol se trouvent décalés d'un angle de dérive. La direction de visée de la caméra est alors décalée par rapport à la direction de vol du drone.

Ainsi, lorsque le drone à voilure fixe est en dérive sous l'effet du vent ou de la compensation du vent, l'axe de visée de la caméra ne se situe plus dans l'axe de direction réel de vol du drone.

Une telle dérive entre l'axe longitudinal du drone et sa direction de vol dégrade les capacités de pilotage de l'utilisateur qui, en configuration de « pilotage immersif », ne peut connaître la trajectoire de vol du drone qu'il pilote, et le cas échéant rectifier son pilotage pour atteindre la destination visée.

Une telle méconnaissance de la trajectoire du drone en présence de vent est par ailleurs problématique du fait que des obstacles sont parfois présents sur cette trajectoire de vol réelle du drone.

En conséquence, lorsque le drone à voilure fixe est hors de la portée visuelle de l'utilisateur, ou lorsque l'utilisateur base essentiellement son pilotage sur la restitution en temps réel des images filmées par la caméra, de tels obstacles ne pourront être évités et il en résultera une interruption du vol et de la prise de vue, voire une détérioration du drone à voilure fixe en cas de choc avec l'obstacle ou en cas de chute.

Un des buts de l'invention est alors de proposer un procédé de capture d'une vidéo à l'aide d'une caméra embarquée sur un drone à voilure fixe, la caméra comprenant un capteur d'image(s), permettant à l'utilisateur d'optimiser son pilotage en présence de vent.

A cet effet, l'invention a pour objet un procédé de capture d'une vidéo à l'aide d'une caméra embarquée sur un drone à voilure fixe, la caméra comprenant un capteur d'image(s), le drone présentant en vol un angle de dérive entre un axe longitudinal du drone et une direction de vol du drone, le procédé comprenant :

- la détermination de l'angle de dérive du drone; et
- l'obtention de la vidéo par acquisition d'image correspondant à une zone de dimensions réduites par rapport à celles du capteur d'image(s), la position de la zone étant déterminée en fonction de l'angle de dérive du drone.

Le procédé de capture d'une vidéo selon l'invention permet de maintenir l'axe de la vidéo obtenue à l'aide de la caméra embarquée sur un drone à voilure fixe dans la direction de vol, et non pas dans la direction de l'axe longitudinal du drone à voilure fixe.

Autrement dit, le procédé selon l'invention permet un ajustement virtuel instantané de la direction visée par la caméra embarquée sur le drone à voilure fixe en fonction de l'intensité du vent latéral.

En outre, l'utilisateur perçoit directement l'effet du vent latéral sur la trajectoire réelle du drone à travers l'image qu'il visualise et rectifie le cas échéant son pilotage de sorte à compenser l'effet de dérive du au vent afin d'atteindre la destination de vol visée et à éviter les obstacles disposés sur cette trajectoire réelle.

Suivant d'autres aspects avantageux de l'invention, le procédé de capture d'une vidéo comporte l'une ou plusieurs des caractéristiques suivantes, prises isolément ou suivant toutes les combinaisons techniquement possibles :

- la caméra comprend un objectif hypergone associé au capteur d'image(s),
- la zone, dont la position est déterminée en fonction de l'angle de dérive, est configurée pour capturer une région de la scène filmée par le capteur d'image(s) embarqué sur le drone selon une direction de visée parallèle à la direction de vol du drone,

- la zone, dont la position est déterminée en fonction de l'angle de dérive ($\alpha$), et la zone obtenue en l'absence de dérive du drone présentent une intersection non nulle,
- la position de la zone est calculée de sorte que la fenêtre correspondante du champ d'ensemble de la caméra effectue, par rapport à celle en l'absence de dérive, une rotation selon l'angle de dérive $\alpha$ du drone autour de l'axe lacet du drone,
- la détermination de l'angle de dérive comprend :

    - la détermination de l'angle entre l'axe longitudinal du drone et le nord magnétique,
    - la détermination de l'angle de dérive en fonction de:

        o l'angle entre l'axe longitudinal du drone et le nord magnétique, et
        o la direction de vol du drone,

- l'obtention de la vidéo comprend l'acquisition de données d'image à partir de l'ensemble de la surface du capteur d'image(s), suivie du traitement numérique des données d'images délivrant des images de vidéo correspondant uniquement à la zone,
- l'acquisition de données d'images uniquement dans la zone au cours de la réalisation de la vidéo, la position de la zone étant déterminée au cours de la réalisation de la vidéo
- lorsque la zone, dont la position est déterminée en fonction de l'angle de dérive, arrive en butée du capteur d'image(s), l'image correspondant à la zone comprend une partie noire,
- lorsque la zone, dont la position est déterminée en fonction de l'angle de dérive, arrive en butée du capteur d'image(s), la position est réinitialisée de sorte que le centre de la zone est sur l'axe longitudinal du drone à voilure fixe.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un système électronique de capture d'une vidéo comprenant un drone à voilure fixe et une caméra embarquée sur le drone à voilure fixe, la caméra comprenant un capteur d'image(s), le drone présentant en vol un angle de dérive entre un axe longitudinal du drone et une direction de vol du drone, le système électronique de capture d'une vidéo comprenant en outre:

- un module de détermination configuré pour déterminer l'angle de dérive du drone ; et
- un module d'obtention configuré pour obtenir la vidéo par acquisition d'au moins une image correspondant à une zone de dimensions réduites par rapport à celles du capteur d'image(s), le module d'obtention étant configuré pour déterminer la position de la zone en fonction de l'angle de dérive du drone.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue en perspective d'un système électronique de capture vidéo selon l'invention, comprenant un drone à voilure fixe de type aile volante, évoluant dans les airs sous le contrôle d'un équipement de télécommande distant;
- la figure 2 est une représentation schématique de la direction de vol du drone à voilure fixe en l'absence de vent;
- la figure 3 est une représentation schématique de la direction de vol du drone à voilure fixe en présence de vent;
- la figure 4 est un organigramme d'un procédé de capture d'une vidéo selon l'invention;
- la figure 5 est une représentation schématique partielle des modules constituant le système électronique de capture d'une vidéo selon l'invention; et
- la figure 6 est une représentation schématique des images correspondant respectivement au champ d'ensemble de la caméra obtenu sur le capteur d'image(s), à la projection de l'image obtenue par l'objectif associé au capteur d'image, et à la zone dont la position est déterminée selon l'invention.

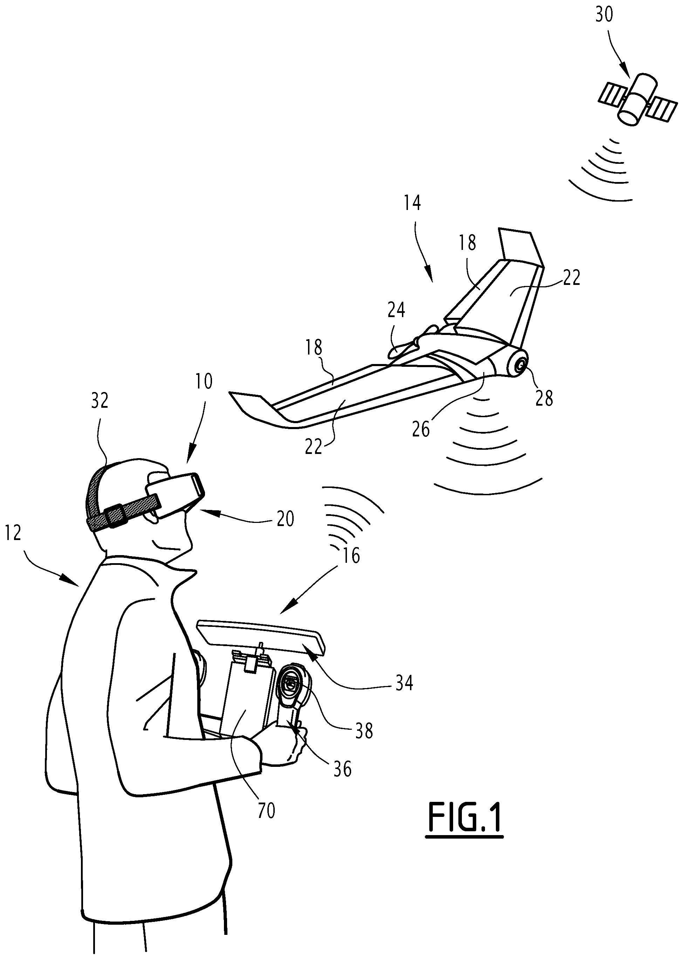

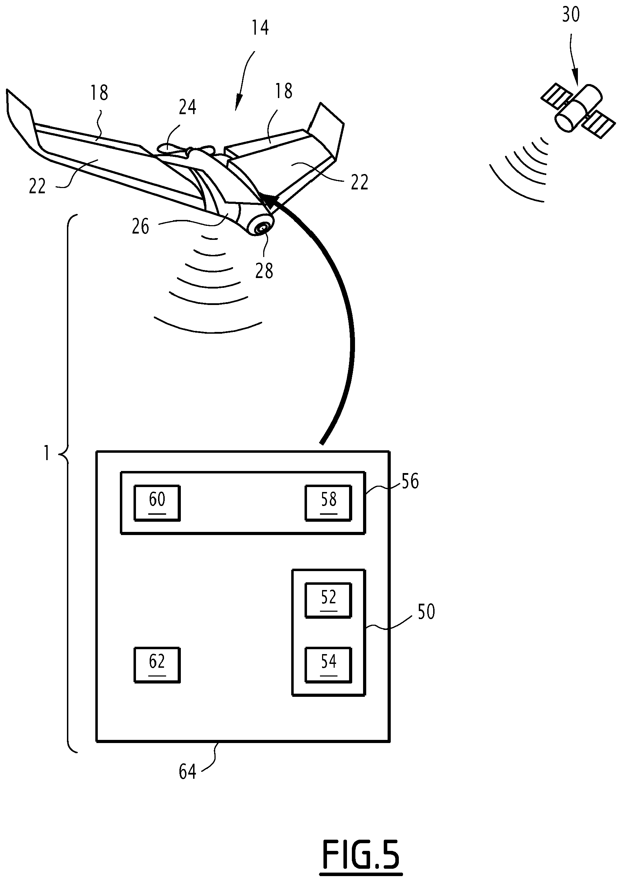

Sur les figures 1 et 5, un système électronique de capture d'une vidéo 1 permet à un utilisateur 12 d'optimiser le pilotage d'un drone 14, en particulier un drone à voilure fixe notamment de type "aile volante".

Le drone à voilure fixe 14 comprend un corps de drone (fuselage) 26 muni en partie arrière d'une hélice 24 et latéralement de deux ailes 22, ces ailes prolongeant le corps de drone 26 dans la configuration illustrée de type "aile volante". Du côté du bord de fuite, les ailes 22 sont munies de gouvernes 18 orientables au moyen de servomécanismes pour contrôler la trajectoire du drone.

Le drone 14 est également muni d'une caméra fixe sur le drone à voilure fixe 14 (i.e. aucun mouvement de la caméra n'est possible). La caméra possédant un capteur d'image(s) 28 configuré pour acquérir au moins une image d'une scène, et un module de transmission, non représenté, configuré pour transmettre, de préférence par ondes radioélectriques, à destination d'un équipement électronique, tel que le module de réception, non représenté, du système électronique de visualisation 10, le module de réception, non représenté, de la manette 16 ou encore le module de réception de la tablette 70 numérique multimédia à écran tactile montée sur la manette 16, non représenté, la ou les images acquises par le capteur d'image(s) 28.

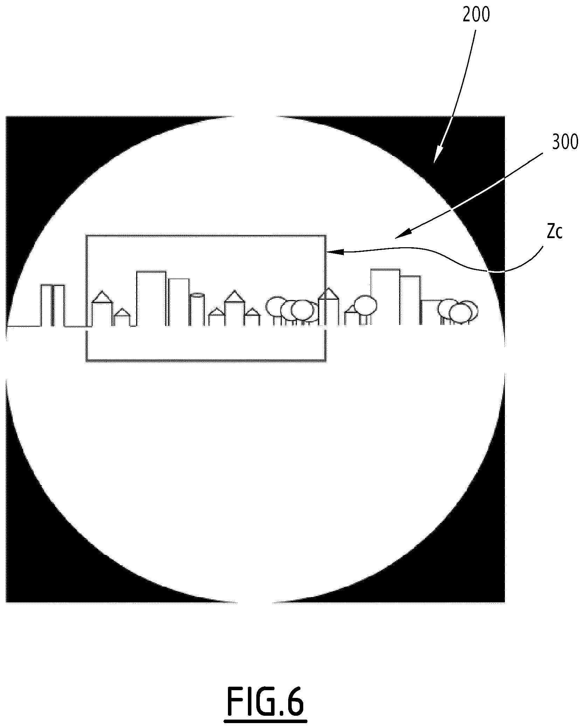

Le capteur d'image(s) 28 est, par exemple, associé à un objectif hémisphérique de type hypergone (de l'anglais *fisheye*), c'est-à-dire couvrant un champ visuel d'un grand angle de vue, de l'ordre de 180° ou plus. La projection 300 de l'image obtenue par l'objectif hypergone associé au capteur d'image(s) 28 est représentée sur la figure 6. La caméra comprend le capteur d'image(s) 28 et l'objectif disposé devant le capteur d'image(s) 28 de façon que le capteur d'image(s) 28 capte les images à travers l'objectif.

Dans l'exemple de la figure 5, le drone à voilure fixe 14 comprend en outre une unité de traitement d'informations 50, formée par exemple d'une mémoire 52 et d'un processeur 54 associé à la mémoire 52.

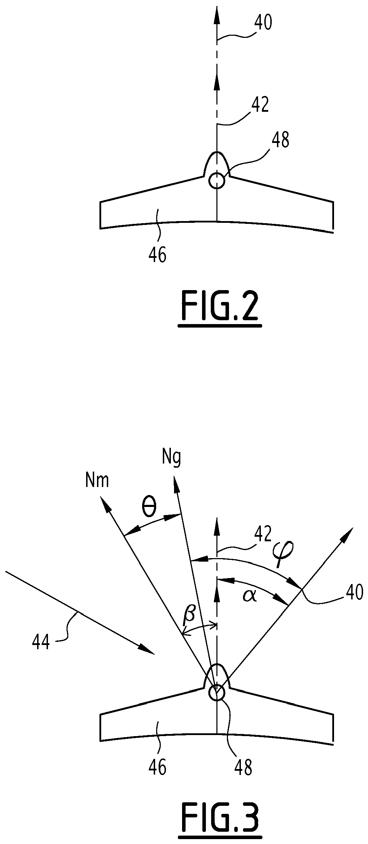

Le drone à voilure fixe 14 comprend également un module de détermination 56 configuré pour déterminer l'angle de dérive $\alpha$ du drone. L'angle de dérive $\alpha$ correspond à l'angle formé, en cours de vol et en présence de vent latéral 44, entre un axe longitudinal 42 du drone et une direction de vol 40 du drone, comme représenté sur la figure 3.

Dans l'exemple de la figure 5, le module de détermination 56 de l'angle de dérive $\alpha$ du drone comprend un module de détermination 58, par exemple un magnétomètre, configuré pour déterminer l'angle $\beta$ entre l'axe longitudinal 42 du drone à voilure fixe 14 et le nord magnétique, comme représenté sur la figure 3.

Le module de détermination 56 de l'angle de dérive $\alpha$ du drone comprend également un module de détermination 60 de la direction de vol 40 du drone à voilure fixe 14, par exemple un module de géolocalisation recevant en temps réel d'une constellation de satellites de géolocalisation 30 les informations permettant au module de détermination 60 de déterminer la position géographique instantanée du drone à voilure fixe 14 et de calculer la direction de vol 40 du drone à voilure fixe 14. La direction de vol 40 du drone à voilure fixe 14 est exprimée par l'angle $\varphi$ entre le nord géographique et la position géographique du drone à voilure fixe 14, comme représenté sur la figure 3. Le module de géolocalisation utilise par exemple le système de géolocalisation GPS ou Galliléo.

A partir de l'angle $\beta$ entre l'axe longitudinal 42 du drone à voilure fixe 14 et le nord magnétique, délivré par le magnétomètre 58, la déclinaison magnétique $\theta$ correspondant à l'angle formé entre la direction du pôle nord géographique et le nord magnétique, comme représenté sur la figure 3, et l'angle $\varphi$ représentatif de la direction de vol 40 délivrée par le module de détermination 60 de la direction de vol 40, le module de détermination 56 de l'angle de dérive $\alpha$ est configuré pour calculer l'angle de dérive $\alpha$.

Par exemple, selon l'illustration de la figure 3, l'angle de dérive $\alpha$ est tel que :

$$|\alpha| = |\varphi| - |\beta| + |\theta|.$$

Le drone à voilure fixe 14 comprend également un module d'obtention 62 configuré pour obtenir la vidéo par acquisition d'au moins une image au moyen du capteur d'image(s) 28, l'image correspondant à une zone Zc du capteur d'image(s) 28, de dimensions réduites par rapport à celles du capteur d'image(s), la position de la zone Zc étant déterminée en fonction de l'angle de dérive $\alpha$ du drone à voilure fixe 14.

Le capteur d'image(s) 28 est l'organe photosensible de la caméra. Il s'agit par exemple d'un capteur CMOS. La zone Zc est une fraction du capteur d'image(s) 28.

Le capteur d'image(s) 28 associé à l'objectif est apte à fournir une image d'ensemble correspondant à un champ d'ensemble 200 de la caméra telle que représentée sur la figure 6. La zone Zc du capteur d'image(s) 28 correspond à une fenêtre du champ d'ensemble de dimensions réduites par rapport à celles du champ d'ensemble. L'image acquise correspondant à la zone Zc est l'image qui serait acquise par cette zone Zc, sans utiliser le reste du capteur d'image(s).

L'obtention d'une image à partir d'une zone Zc de dimensions réduites du capteur d'image(s) permet d'orienter virtuellement l'axe de prise de vue de la caméra dans la direction de la fenêtre du champ d'ensemble de la caméra correspondant à la zone Zc de dimensions réduites, sans modifier l'orientation physique de la caméra, qui reste immobile par rapport au drone à voilure fixe 14.

Selon une première variante, le module d'obtention 62 comprend un module d'acquisition de données d'image $d_I$, non représenté, configuré pour acquérir des données d'image à partir de l'ensemble de la surface du capteur d'image(s), et un module de traitement numérique des données d'images, non représenté, configuré pour délivrer des images de vidéo correspondant uniquement à la zone Zc, la position de la zone Zc étant déterminée en fonction de l'angle de dérive $\alpha$ du drone à voilure fixe 14. La sortie du module d'acquisition est reliée à l'entrée du module de traitement numérique.

Selon une deuxième variante, le module d'obtention 62 comprend uniquement un module d'acquisition de données d'image, non représenté, configuré pour acquérir des données d'image uniquement dans la zone Zc au cours de la réalisation vidéo, la position de la zone Zc étant déterminée en fonction de l'angle de dérive $\alpha$ du drone à voilure fixe 14.

Dans l'exemple de la figure 5, le module de détermination 56 de l'angle de dérive $\alpha$ du drone à voilure fixe 14 et le module d'obtention 62 configuré pour obtenir la vidéo sont réalisés chacun de sorte à comprendre un logiciel exécutable par le processeur 54. La mémoire 52 de l'unité de traitement d'informations 50 est alors apte à stocker un logiciel de détermination configuré pour déterminer l'angle de dérive $\alpha$ du drone à voilure fixe 14, et un logiciel d'obtention configuré pour obtenir la vidéo par acquisition d'image(s) correspondant à une zone Zc de dimensions réduites par rapport à celles du capteur d'image(s) 28, la position de la zone Zc étant déterminée en fonction de l'angle de dérive α du drone à voilure fixe 14.

Le processeur 54 de l'unité de traitement d'informations 50 est alors apte à exécuter le logiciel de détermination et le logiciel d'obtention au moyen d'un programme d'ordinateur.

En variante, le module de détermination 56 de l'angle de dérive α du drone à voilure fixe 14 et le module d'obtention 62 configuré pour obtenir la vidéo sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*) montés sur une carte électronique 64 embarquée sur le drone à voilure fixe 14.

Un système électronique de visualisation 10 permet à l'utilisateur 12 de visualiser des images, notamment des images de la vidéo reçue de la part du drone à voilure fixe 14.

Le système électronique de visualisation 10 comprend un appareil électronique, par exemple, un ordiphone (de l'anglais *smartphone*), muni d'un écran d'affichage, et un casque 20 comportant un support de réception de l'appareil électronique, une surface d'appui contre le visage de l'utilisateur 12, en regard de ses yeux, et deux dispositifs optiques disposés entre le support de réception et la surface d'appui.

Le casque 20 comporte en outre une sangle de maintien 32 permettant de maintenir le casque 20 sur la tête de l'utilisateur 12.

L'appareil électronique est amovible par rapport au casque 20 ou intégré au casque 20.

Le système électronique de visualisation 10 est, par exemple, relié à une manette 16 via une liaison de données, non représentée, la liaison de données étant une liaison radioélectrique ou encore une liaison filaire.

Dans l'exemple de la figure 1, le système électronique de visualisation 10 comprend en outre un module de réception, non représenté, configuré pour recevoir au moins une image de la part du drone à voilure fixe 14, la transmission de l'image étant effectuée de préférence par ondes radioélectriques.

Le système de visualisation 10 est par exemple un système de visualisation en réalité virtuelle, c'est-à-dire un système permettant à l'utilisateur 12 de visualiser une image dans son champ visuel, avec un angle de champ de vision, également appelé FOV (de l'anglais *Field Of Vision,* ou *Field Of View*), ayant une valeur importante, typiquement supérieure à 90°, de préférence supérieure ou égale à 100°, afin de procurer une vision immersive (également appelée « vision FPV » de l'anglais *First Person View*) pour l'utilisateur 12.

La manette 16 est connue en soi, et permet par exemple de piloter le drone à voilure fixe 14. La manette 16 comprend deux poignées de préhension 36, chacune étant destinée à être saisie par une main respective de l'utilisateur 12, une pluralité d'organes de commande, comprenant ici deux manches à balai 38 (de l'anglais *joystick*), chacun étant disposé à proximité d'une poignée de préhension 36 respective et étant destiné à être actionné par l'utilisateur 12, de préférence par un pouce respectif.

La manette 16 comprend également une antenne radioélectrique 34 et un émetteur-récepteur radioélectrique, non représenté, pour l'échange de données par ondes radioélectriques avec le drone à voilure fixe 14, à la fois en liaison montante et en liaison descendante.

En complément, ou à titre d'alternative au regard du système de visualisation 10, une tablette 70 numérique multimédia à écran tactile est montée sur la manette 16 pour assister l'utilisateur 12 lors du pilotage du drone à voilure fixe 14.

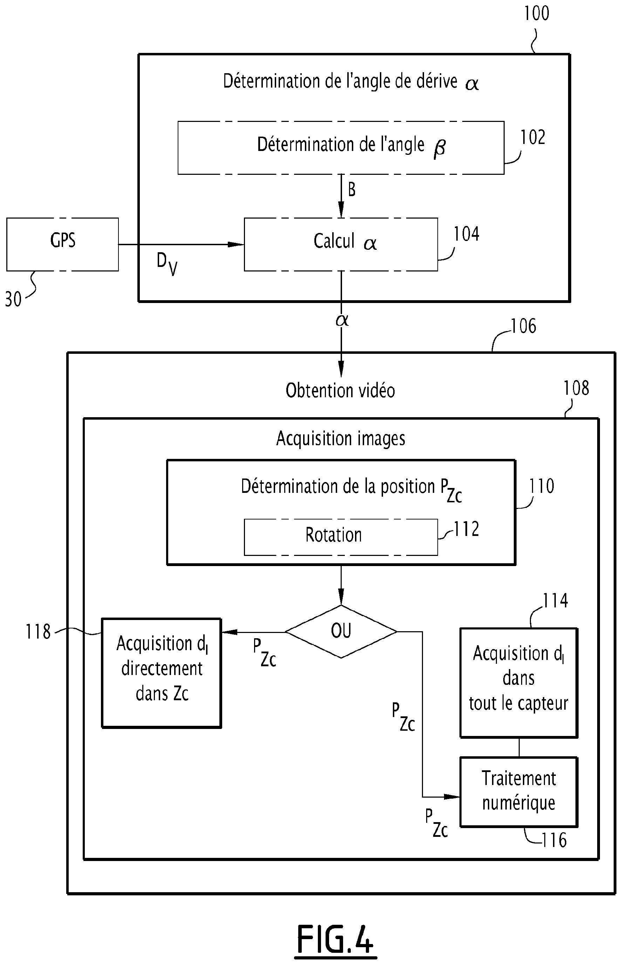

Le fonctionnement du système électronique de capture d'une vidéo 1 selon l'invention, va être à présent décrit à l'aide de la figure 4 illustrant un organigramme du procédé de capture d'une vidéo, mis en oeuvre par ordinateur.

Le procédé de capture d'une vidéo selon l'invention permet d'orienter virtuellement l'axe de prise de vue de la caméra et donc la direction filmée par le drone lorsque le drone à voilure fixe 14 subit l'action du vent 44.

Lorsque le capteur d'image(s) 28 est associé à un objectif hypergone, il est possible d'orienter virtuellement l'axe de prise de vue de la caméra avec un débattement angulaire suffisant, en particulier pour tenir compte de la dérive du drone à voilure fixe 14.

En particulier, le procédé de capture d'une vidéo selon l'invention permet de définir un capteur d'image(s) virtuel par sélection d'une zone Zc de dimensions réduites par rapport aux dimensions réelles du capteur d'image(s) 28.

Sur la figure 6, les images correspondant respectivement au champ d'ensemble 200 de la caméra obtenu sur le capteur d'image(s) 28, à la projection 300 de l'image obtenue par l'objectif associé au capteur d'image, et à la zone Zc dont la position est déterminée selon l'invention, sont respectivement représentées.

Lors d'une étape 100, l'angle de dérive α du drone à voilure fixe 14 est déterminé par le module de détermination 56.

Selon le mode de réalisation représenté en figure 4, l'étape de détermination 100 de l'angle de dérive α comprend une étape 102 de détermination de l'angle β entre l'axe longitudinal 42 du drone et le nord magnétique mise en oeuvre par le magnétomètre 58.

Par ailleurs, selon le mode de réalisation représenté en figure 4, l'étape de détermination 100 de l'angle de dérive α comprend une étape 104 de calcul de l'angle de dérive α à partir de l'angle β entre l'axe longitudinal 42 du drone à voilure fixe 14 et le nord magnétique, délivré par le magnétomètre 58, la déclinaison magnétique θ correspondant à l'angle formé entre la direction du pôle nord géographique et le nord magnétique, comme représenté sur la figure 3, et l'angle φ représentatif de la di-

rection de vol 40 délivrée par le module GPS 60 recevant en temps réel d'un satellite GPS 30 les informations de cap représentatives de la direction de vol 40 du drone à voilure fixe 14.

Lors d'une étape 106, la vidéo filmée en cours de vol par le drone à voilure fixe 14 est obtenue.

Plus précisément, l'étape d'obtention de la vidéo 106 comprend une étape 108 d'acquisition d'image(s).

Lorsque l'objectif associé au capteur d'image(s) 28 est de type hypergone, l'étape d'acquisition d'images 108 met notamment en oeuvre une correction, non représentée, des distorsions géométriques introduites par le capteur d'image(s) 28.

L'étape d'acquisition d'images 108 comprend une étape 110 de détermination de la position $P_{Zc}$ de la zone Zc de dimensions réduites par rapport aux dimensions réelles du capteur d'image(s) 28 en fonction de l'angle de dérive $\alpha$ du drone à voilure fixe 14.

Selon une première variante, la zone Zc dont la position $P_{Zc}$ est déterminée 110 en fonction de l'angle de dérive $\alpha$, est configurée pour capturer une région de la scène filmée par le capteur d'image(s) embarqué sur le drone selon une direction de visée parallèle à la direction de vol (40) du drone.

En d'autres termes, la direction de la prise de vue est orientée virtuellement (et non mécaniquement) sur la direction réelle de vol au moyen du procédé selon l'invention.

Selon une deuxième variante, combinable avec la première variante, la zone Zc, dont la position $P_{Zc}$ est déterminée 110 en fonction de l'angle de dérive $\alpha$, et la zone obtenue en l'absence de dérive du drone présentent une intersection non nulle.

La figure 2 est une représentation schématique de la direction de vol du drone à voilure fixe 14 en l'absence de vent. En l'absence de vent, la direction de vol 40 et l'axe longitudinal 42 du drone à voilure fixe 14 sont parallèles (i.e. les vecteurs représentatifs de la direction de vol 40 et de l'axe longitudinal 42 du drone sont colinéaires)

Le centre de la zone obtenue en l'absence de dérive du drone est en conséquence disposé sur ces deux directions 40 et 42 confondues. Selon la deuxième variante, la taille de la zone est donc optimisée de sorte que les zones déterminées en présence et en absence de vent ne soient pas disjointes, ce qui permet d'assurer une continuité visuelle lorsque le vent se lève brutalement.

Selon une troisième variante, la position $P_{Zc}$ de la zone Zc est calculée de manière que la fenêtre correspondante du champ d'ensemble de la caméra effectue, par rapport à celle en l'absence de dérive, une rotation 112 selon l'angle de dérive $\alpha$ du drone autour de l'axe lacet 48 du drone.

Une telle rotation du centre de la fenêtre correspondant à la zone Zc revient à une translation et/ou une rotation de la zone Zc sur le capteur d'image(s).

En d'autres termes, la fenêtre correspondant à la zone Zc est dynamiquement et virtuellement déplacée dans le champ de la caméra produit par le capteur d'image(s) (28).

Une fois que la position $P_{Zc}$ est déterminée en fonction de l'angle de dérive $\alpha$, il est possible que la zone Zc arrive en butée du capteur d'image(s) 28. Dans ce cas, selon une première variante, l'image correspondant à la zone Zc comprend une partie noire, ou selon une deuxième variante, la position $P_{Zc}$ est réinitialisée de sorte que le centre de la zone Zc est sur l'axe longitudinal 42 du drone à voilure fixe 14. Selon un mode réalisation particulier, l'étape d'acquisition d'images 108 comprend l'acquisition 114 de données d'image à partir de l'ensemble du capteur d'image(s), suivie du traitement numérique 116 des données d'images délivrant des images de vidéo correspondant uniquement à la zone Zc.

En d'autres termes, selon ce mode de réalisation, le traitement numérique est effectué postérieurement à la capture des données d'images. Un tel traitement numérique permet de décaler dans le temps l'obtention d'images rectifiées à restituer à l'utilisateur.

Selon un autre mode réalisation particulier, l'étape d'acquisition d'images 108 comprend l'acquisition 118 de données d'images uniquement dans la zone Zc au cours de la réalisation de la vidéo, la position $P_{Zc}$ de la zone Zc étant déterminée au cours de la réalisation de la vidéo.

En d'autres termes, selon cet autre mode de réalisation, la sélection de la zone Zc est mise en oeuvre en temps réel et est asservie en temps réel au dérive du drone à voilure fixe 14.

Le procédé de capture d'une vidéo selon l'invention permet alors, d'optimiser le pilotage du drone grâce à l'asservissement, de la position de la zone Zc, à la dérive du drone à voilure fixe 14 provoqué par un vent latéral.

L'utilisateur 12 perçoit, notamment via l'utilisation du système de visualisation en réalité virtuelle 10, la direction réelle du vol du drone à voilure fixe 14 même en cas de dérive de celui-ci puisque le procédé de capture vidéo selon l'invention vise à garantir que la direction de visée du capteur d'image(s) et la direction de vol du drone sont parallèles.

Le procédé de capture d'une vidéo selon l'invention permet en conséquence d'améliorer l'ergonomie de la vision immersive (également appelée « vision FPV » de l'anglais *First Person View*).

« L'expérience utilisateur » en configuration de pilotage immersif permet donc à l'utilisateur 12 d'optimiser son pilotage, afin de prendre en compte la dérive du drone à voilure fixe résultant de la force du vent latéral, pour atteindre efficacement la destination de vol désirée.

Ceci permet en outre d'éviter la chute ou la détérioration du drone à voilure fixe en présence d'obstacles disposés sur la direction de vol résultant de la dérive et non visibles si la direction de visée du capteur d'image(s) pointerait selon la direction longitudinale du drone

à voiture fixe 14.

## Revendications

**1.** Procédé de capture d'une vidéo à l'aide d'une caméra embarquée sur un drone (14) à voilure fixe, la caméra comprenant un capteur d'image(s) (28), le drone (14) présentant en vol un angle ($\alpha$) de dérive entre un axe longitudinal (42) du drone et une direction (40) de vol du drone, le procédé comprenant :

- la détermination (100) de l'angle ($\alpha$) de dérive du drone (14); et
- l'obtention (106) de la vidéo par acquisition (108) d'image(s) correspondant à une zone (Zc) de dimensions réduites par rapport à celles du capteur d'image(s), la position ($P_{Zc}$) de la zone étant déterminée (110) en fonction de l'angle de dérive ($\alpha$) du drone (14).

**2.** Procédé selon la revendication 1, dans lequel la caméra comprend un objectif hypergone associé au capteur d'image(s) (28).

**3.** Procédé selon la revendication 1 ou 2, dans lequel la zone (Zc), dont la position ($P_{Zc}$) est déterminée (110) en fonction de l'angle de dérive ($\alpha$), est configurée pour capturer une région de la scène filmée par le capteur d'image(s) embarqué sur le drone selon une direction de visée parallèle à la direction de vol (40) du drone.

**4.** Procédé selon l'une quelconque des revendications précédentes, dans lequel la zone (Zc), dont la position ($P_{Zc}$) est déterminée (110) en fonction de l'angle de dérive ($\alpha$), et la zone obtenue en l'absence de dérive du drone présentent une intersection non nulle.

**5.** Procédé selon l'une quelconque des revendications précédentes, dans lequel la position ($P_{Zc}$) de la zone (Zc) est calculée de sorte que la fenêtre correspondante du champ d'ensemble de la caméra effectue, par rapport à celle en l'absence de dérive, une rotation 112 selon l'angle de dérive $\alpha$ du drone autour de l'axe lacet 48 du drone.

**6.** Procédé selon l'une quelconque des revendications précédentes, dans lequel la détermination (100) de l'angle de dérive ($\alpha$) comprend :

- la détermination (102) de l'angle ($\beta$) entre l'axe longitudinal (42) du drone et le nord magnétique,
- la détermination de l'angle de dérive ($\alpha$) en fonction de:

∘ l'angle ($\beta$) entre l'axe longitudinal (42) du drone et le nord magnétique, et
∘ la direction (40) de vol du drone.

**7.** Procédé selon l'une quelconque des revendications précédentes, dans lequel l'obtention de la vidéo comprend l'acquisition (114) de données d'image à partir de l'ensemble de la surface du capteur d'image(s), suivie du traitement numérique (116) des données d'images délivrant des images de vidéo correspondant uniquement à la zone (Zc).

**8.** Procédé selon l'une quelconque des revendications précédentes, comprenant l'acquisition (118) de données d'images uniquement dans la zone (Zc) au cours de la réalisation de la vidéo, la position ($P_{Zc}$) de la zone (Zc) étant déterminée au cours de la réalisation de la vidéo.

**9.** Procédé selon l'une quelconque des revendications précédentes, dans lequel lorsque la zone (Zc), dont la position ($P_{Zc}$) est déterminée (110) en fonction de l'angle de dérive ($\alpha$), arrive en butée du capteur d'image(s) (28), l'image correspondant à la zone (Zc) comprend une partie noire.

**10.** Procédé selon l'une quelconque des revendications 1 à 8, dans lequel lorsque la zone (Zc), dont la position ($P_{Zc}$) est déterminée (110) en fonction de l'angle de dérive ($\alpha$), arrive en butée du capteur d'image(s) (28), la position ($P_{Zc}$) est réinitialisée de sorte que le centre de la zone (Zc) est sur l'axe longitudinal du drone à voilure fixe (14).

**11.** Produit programme d'ordinateur comprenant des instructions logicielles pour la mise en oeuvre d'un procédé selon l'une quelconque des revendications précédentes lorsqu'il est exécuté sur un ordinateur.

**12.** Système électronique de capture d'une vidéo (1) comprenant un drone à voilure fixe (14) et une caméra embarquée sur le drone, la caméra comprenant un capteur d'image(s) (28) le drone présentant en vol un angle de dérive ($\alpha$) entre un axe longitudinal (42) du drone et une direction de vol du drone, **caractérisé en ce que** le système électronique de capture vidéo comprend en outre :

- un module de détermination (56) configuré pour déterminer l'angle de dérive ($\alpha$) du drone ; et
- un module d'obtention (62) configuré pour obtenir la vidéo par acquisition d'au moins une image correspondant à une zone (Zc) de dimensions réduites par rapport à celles du capteur d'image(s) (28), le module d'obtention (62) étant configuré pour déterminer la position ($P_{Zc}$) de la zone en fonction de l'angle de dérive du drone.

<u>FIG.1</u>

## FIG.2

## FIG.3

100

Détermination de l'angle de dérive $\alpha$

Détermination de l'angle $\beta$ — 102

B

GPS

$D_V$

Calcul $\alpha$ — 104

30

$\alpha$

106

Obtention vidéo

108

Acquisition images

Détermination de la position $P_{Zc}$ — 110

Rotation — 112

OU

118 — Acquisition $d_l$ directement dans Zc

$P_{Zc}$

114

Acquisition $d_l$ dans tout le capteur

$P_{Zc}$

$P_{Zc}$

$P_{Zc}$

Traitement numérique — 116

## FIG.4

FIG.5

## FIG.6

Europäisches
Patentamt

European
Patent Office

Office européen
des brevets

**RAPPORT DE RECHERCHE EUROPEENNE**

Numéro de la demande

EP 17 18 5051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2016/139595 A1 (YANG JEONGHWA [KR] ET AL) 19 mai 2016 (2016-05-19) * figures 1B, 4 * * figure 5 * * alinéas [0218] - [0220]; figure 8 * * alinéas [0240] - [0242]; figure 17 * ----- | 1-12 | INV. B64C39/02 G05D1/00 H04N7/18 |
| A | US 2011/029161 A1 (ZUFFEREY JEAN-CHRISTOPHE [CH] ET AL) 3 février 2011 (2011-02-03) * figure 1 * * alinéa [0040]; figure 3a * ----- | 1-12 | |
| A | US 2016/219223 A1 (ELINE PIERRE [FR]) 28 juillet 2016 (2016-07-28) * alinéa [0057]; figure 1 * * figures 2a,2b * * alinéas [0075] - [0080]; figure 3 * * figure 5 * ----- | 1-12 | |
| | | | **DOMAINES TECHNIQUES RECHERCHES (IPC)** G05D H04N B64C |

Le présent rapport a été établi pour toutes les revendications

| Lieu de la recherche | Date d'achèvement de la recherche | Examinateur |
|---|---|---|
| Munich | 4 décembre 2017 | Berne, Jean-François |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
### RELATIF A LA DEMANDE DE BREVET EUROPEEN NO.

EP 17 18 5051

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-12-2017

| Document brevet cité au rapport de recherche | Date de publication | Membre(s) de la famille de brevet(s) | Date de publication |
|---|---|---|---|
| US 2016139595 A1 | 19-05-2016 | EP 3222051 A1<br>KR 20160058471 A<br>US 2016139595 A1<br>WO 2016080598 A1 | 27-09-2017<br>25-05-2016<br>19-05-2016<br>26-05-2016 |
| US 2011029161 A1 | 03-02-2011 | EP 2274658 A1<br>ES 2389549 T3<br>PL 2274658 T3<br>US 2011029161 A1<br>WO 2009127907 A1 | 19-01-2011<br>29-10-2012<br>30-11-2012<br>03-02-2011<br>22-10-2009 |
| US 2016219223 A1 | 28-07-2016 | CN 105915786 A<br>EP 3048789 A1<br>FR 3032052 A1<br>JP 2016140069 A<br>US 2016219223 A1 | 31-08-2016<br>27-07-2016<br>29-07-2016<br>04-08-2016<br>28-07-2016 |

EPO FORM P0460

Pour tout renseignement concernant cette annexe : voir Journal Officiel de l'Office européen des brevets, No.12/82